# EUROPEAN PATENT APPLICATION

(11) **EP 4 550 799 A1**
(43) Date of publication of application: **07.05.2025**
(21) Application number: 22949507.2
(22) Date of filing: 30.11.2022
(51) Int. Cl.: H04N 21/2381, H04N 21/235, H04N 21/462

(54) **INFORMATION PROCESSING DEVICE AND METHOD FOR PROVIDING VIRTUAL SPACE TO MULTIPLE TERMINALS**

(30) Priority: 30.06.2022 JP 2022106029; 13.10.2022 JP 2022164829
(71) Applicant: Ichihashi, Norio, Tokyo 152-0035 (JP); Kainuma, Kenichi, Tokyo 135-0062 (JP)
(72) Inventor: OSANAI, Hiroki, Yokohama-shi, Kanagawa 226-0016 (JP); KAINUMA, Kenichi, Tokyo 135-0062 (JP)
(74) Representative: AWA Sweden AB
(86) International application number: PCT/JP2022/044183
(87) International publication number: WO 2024/004234

(57) **Abstract**

A processing apparatus according to one embodiment includes a memory device and a processor. The memory device stores virtual environment data of a virtual environment shared by a plurality of users. The processor is accessible to the memory device, and is communicable with a plurality of terminals corresponding to the users. The processor reads first data including a model of an object belonging to the virtual environment included in the virtual environment data stored in the memory device, transmits the first data to the terminals using a network line, reads second data including coordination data and operation state data of the object included in the virtual environment data stored in the memory device, and distributes the second data to the terminals using broadcasting.

## Description

### Technical Field

Embodiments described herein relate generally to an information processing apparatus and a method to provide virtual environment with respect to a plurality of terminals.

### Background Art

Generally, data in a virtual environment (for example, a space realized by virtual reality) is transmitted from a server to a terminal via a network line, such as the Internet, for example. When the number of users of the virtual environment increases, the amount of data and the number of communications sent by the server to the terminal increase.

When a change occurs in the virtual environment, one terminal is provided with a virtual environment which reflects the change, but another terminal is provided with a virtual environment which does not reflect the change, and there may be a difference in the virtual environment among multiple terminals.

Furthermore, in existing metaverse systems, a method in which algorithms are used to compensate or coordinate multiple virtual environments for each of multiple users is utilized.

### Summary of Invention

### Technical Problem

Embodiments of the present application have been considered in view of the above-mentioned circumstances, and relate to an information processing apparatus to provide a virtual environment which can be shared by multiple users, and a method of the same.

### Means for Solving the Problem

According to an embodiment, an information processing apparatus includes a memory device and a processor. The memory device stores virtual environment data of a virtual environment shared by a plurality of users. The processor is accessible to the memory device, and is communicable with a plurality of terminals corresponding to the users. The processor reads first data including a model of an object belonging to the virtual environment included in the virtual environment data stored in the memory device, transmits the first data to the terminals using a network line which is bidirectionally communicable, reads second data including coordination data and operation state data of the object included in the virtual environment data stored in the memory device, and distributes the second data to the terminals using digital broadcasting. Upon receipt of a participation request to the virtual environment from a first terminal of the terminals, the processor transmits the first data to the first terminal via the network line, and transmits a portion of the first data which at least corresponds to the first terminal to another terminal than the first terminal of the terminals via the network line.

### Advantageous Effects of Invention

According to an embodiment of the present application, multiple users can share a virtual environment.

### Brief Description of Drawings

FIG. 1 is a block diagram showing an example of an information processing system of a first embodiment.
FIG. 2 is a conceptual diagram showing an example of a virtual environment layer and a network layer realized by the information processing system of the first embodiment.
FIG. 3 is a conceptual diagram showing an example of definition data used in the first embodiment.
FIG. 4 is a conceptual diagram showing an example of operation data and dynamic action data used in the first embodiment.
FIG. 5 is a block diagram showing an example of a schematic structure of a server of the first embodiment.
FIG. 6 is a block diagram showing an example of a schematic structure of a terminal of the first embodiment.
FIG. 7 is a flowchart of an example of a transmission process of definition data from a server to a terminal.
FIG. 8 is a flowchart of an example of a transmission process of dynamic action data from a server to a terminal.
FIG. 9 is a flowchart of an example of a reception process of definition data from the server by the terminal.
FIG. 10 is a flowchart of an example of a reception process of broadcast data from the server by the terminal.
FIG. 11 is a flowchart of an example of a process realizing a virtual environment by the terminal.
FIG. 12 is a flowchart of an example of a participation process of a terminal executed by an information processing system of a second embodiment.

Mode for Carrying Out the Invention Hereinafter, embodiments will be explained with reference to the accompanying drawings. In the figures, same or similar functions and structural elements will be referred to by the same reference numbers and explanation considered redundant may be omitted or simplified.

### (First embodiment)

An information processing system of first embodiment uses digital broadcasting to simultaneously distribute (in other words, simultaneously transmit) a portion of data for realizing a virtual environment from a server to multiple terminals.

In the first embodiment, the network line is a line for executing communication by a non-broadcasting method. The network line may be a wireless network line or a wired network line. The network line may include the Internet, for example, or may include local area network (LAN), or may include wireless LAN. In the first embodiment, the network line is a network which allows, for example, bidirectional communication.

In the first embodiment, digital broadcasting allows the server to distribute broadcast data to many terminals simultaneously and with low load. Digital broadcasting may be at least one of terrestrial digital broadcasting and satellite digital broadcasting. Digital broadcasting transmits broadcast data using radio waves in a predetermined range of frequencies. Note that, analog broadcasting may be used in place of digital broadcasting.

In the first embodiment, data may include, for example, various software, programs, information, signals, requests, commands, notifications, instructions, or responses.

In the first embodiment, the virtual environment may be described as a metaverse. In first embodiment, one virtual environment is shared by multiple users.

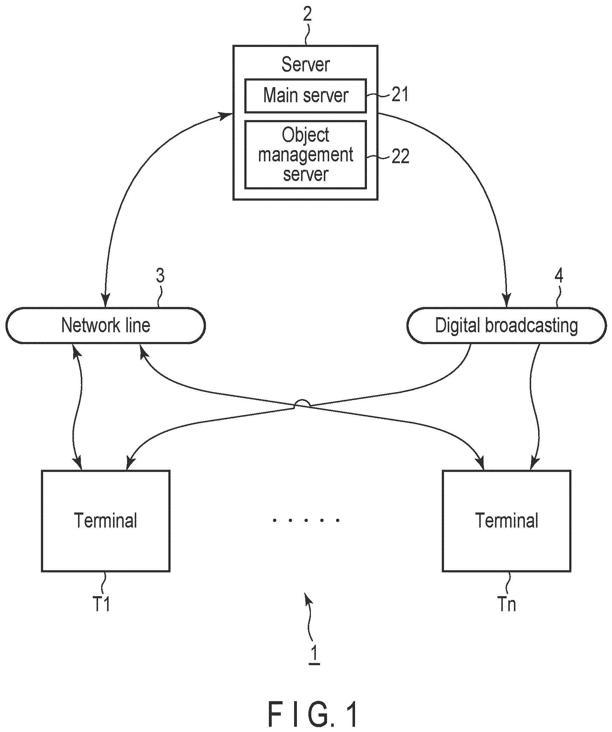

FIG. 1 is a block diagram showing an example of the structure of an information processing system 1 of the first embodiment.

The information processing system 1 includes a server 2 and a plurality of terminals T1 to Tn. In the first embodiment, terminal T1 may be described as a representative example among the terminals T1 to Tn. Terminals T2 to Tn may have the same structure as terminal T1 and perform the same operation. The server 2 may be, for example, an information processing apparatus or host computer. Each of the terminals T1 to Tn may be, for example, a computer, tablet computer, smart phone, game console, wearable device, or information processing apparatus.

The server 2 receives data from terminals T1 to Tn via a network line 3.

The server 2 mainly transmits non-variable first data to terminals T1 to Tn via the network line 3. The first data may be, for example, data which changes less than a predetermined frequency.

The server 2 mainly transmits second data of a changeable nature to terminals T1 to Tn in a one-to-many manner using digital broadcasting 4. The second data may, for example, change more times or more frequently than the first data. The second data may be, for example, data whose change exceeds a predetermined frequency.

The first embodiment is described using a case of a single server 2 as an example, but the functions of the server 2 may be realized by multiple distributed servers working together.

Specifically, the server 2 may include, for example, a main server 21 and an object management server 22. The object management server 22 may be a Non-Fungible Token (NFT) server. In this case, the main server 21 executes, for example, a process for unscrambling the digital broadcasting 4 with terminals T1 to Tn. The object management server 22, for example, manages data necessary for the structure of the virtual environment and transmits the data to the terminals T1 to Tn.

The server 2 may include, for example, a data server which manages the first and second data, a server which executes a process of transmitting the first data to terminals T1 to Tn, and a server which executes a process of transmitting the second data to terminals T1 to Tn. Such a structure allows the load of multiple servers to be distributed, and each server can be set up in a state suitable for respective role thereof.

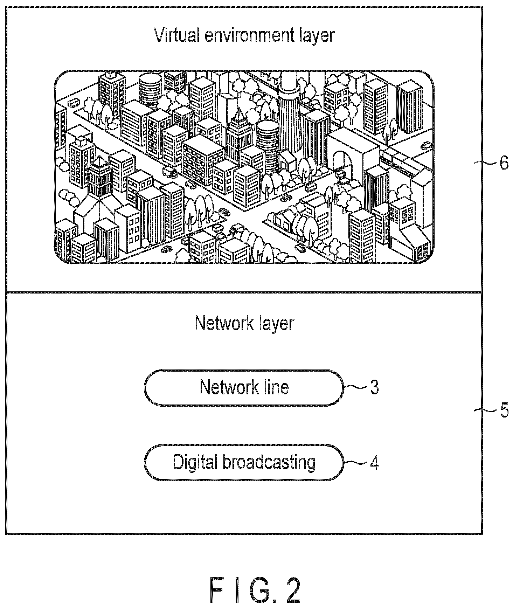

FIG. 2 is a conceptual diagram showing an example of layers realized by the information processing system 1 of the first embodiment.

The information processing system 1 includes, for example, a network layer 5 which performs physical communication and a virtual environment layer 6 which is an upper layer of the network layer 5 and realizes a virtual environment using the network layer 5.

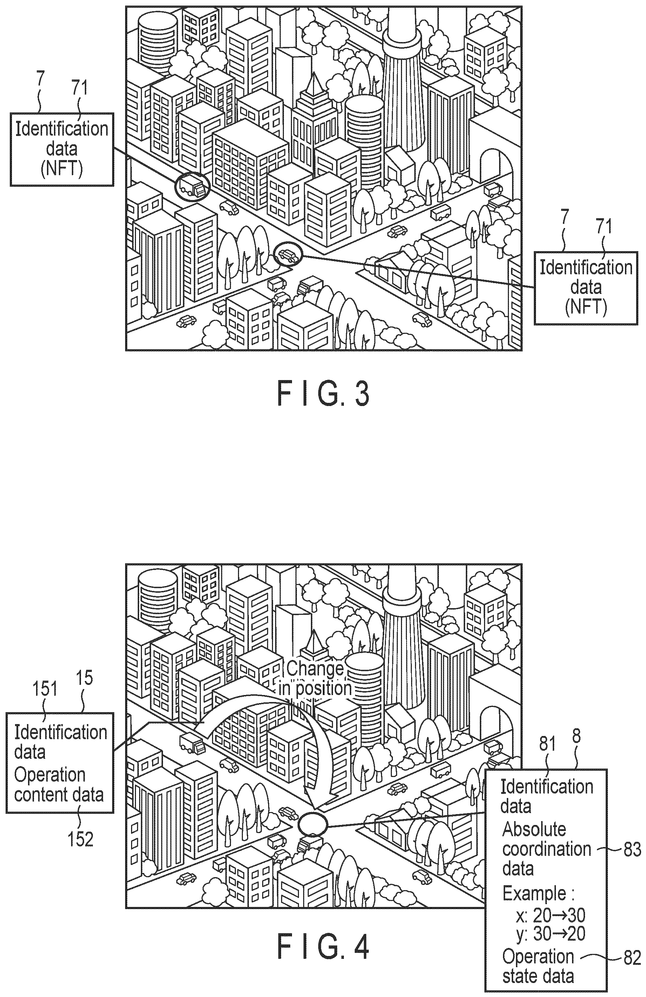

FIG. 3 is a conceptual diagram showing an example of definition data 7 used in first embodiment.

In the first embodiment, definition data 7 is non-variable data which defines various objects of the virtual environment. The definition data 7 is an example of data which changes less than dynamic action data (for example, data which changes less frequently per unit time).

The definition data 7 is data to define objects, such as, for example, models, 3D models, chattels, real estate, structures, articles, parts, backgrounds, and avatars which exist in the virtual environment. The definition data 7 may include, for example, identification data 71 and non-changeable data related to the objects. The identification data 71 may also be secured information (security information). The identification data 71 may be, for example, a hash code. The identification data 71 is managed as an NFT. Thus, the object defined by the definition data 7 is identifiable to the user who owns it. The identification data 71 and owner thereof may be managed using, for example, a blockchain.

FIG. 4 is a conceptual diagram showing an example of operation data 15 and dynamic action data 8 used in the first embodiment.

The operation data 15 is sent to the server 2 from any of the terminals T1 to Tn. The operation data 15 is data indicating what operations the user has performed with respect to the virtual environment. The operation data 15 may include, for example, object identification data 151 and operation content data 152 indicating the operations performed by the user.

The dynamic action data 8 is, for example, a type of data related to the virtual environment, and is data which changes over time based on the operation data 15. The dynamic action data 8 may include object identification data 81, changeable data (parameters) such as object position data, and operation status data 82. The dynamic action data 8 is an example of data which changes more frequently than the definition data 7 (for example, data which changes more frequently per unit time). In the first embodiment, the dynamic action data 8 may be described as variation data. The dynamic action data 8 may include, for example, identification data 81, operation status data 82, and absolute coordinate data 83 in the virtual environment regarding the objects existing in the virtual environment. In this case, the dynamic action data 8 changes when the object moves within the virtual environment. Furthermore, the dynamic action data 8 may change, for example, if the shape of the object changes. In the first embodiment, the case where the position data is absolute coordinate data 83 is described as an example, but other data or other coordinate data may be used instead of absolute coordinate data 83 as long as the position can be specified.

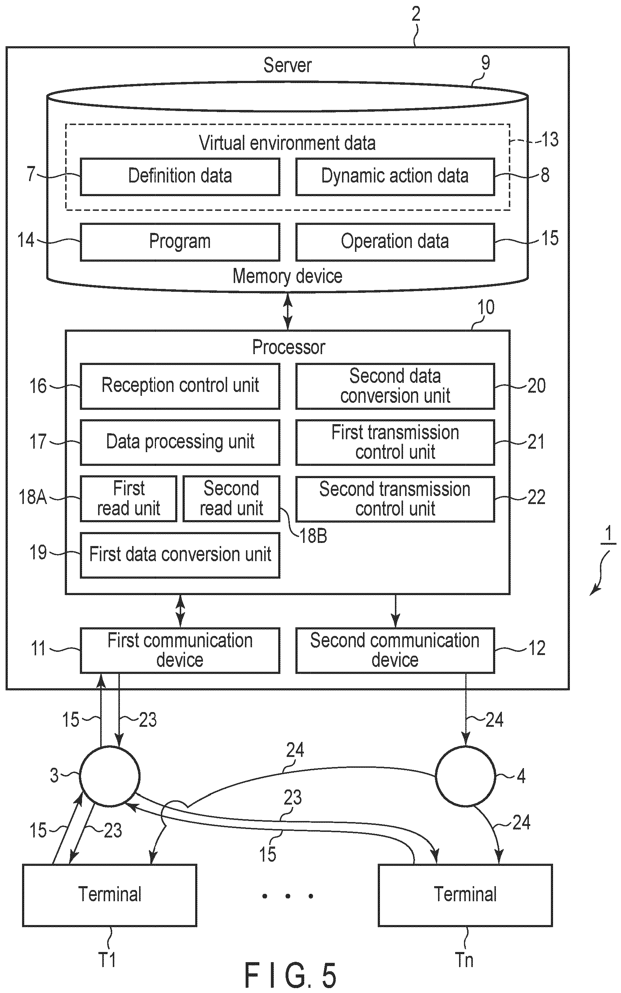

FIG. 5 is a block diagram showing an example of a schematic structure of the server 2 of the first embodiment.

The server 2 includes a memory device 9, processor 10, first communication device 11, and second communication device 12.

The memory device 9 stores virtual environment data 13 necessary to realize the virtual environment, including the definition data 7 and the dynamic action data 8, and program (software) 14. Furthermore, the memory device 9 also stores the operation data 15. The memory device 9 may include, for example, a non-transient non-volatile storage device and a volatile storage device. The memory device 9 may be realized by a combination of multiple storage devices.

The processor 10 is, for example, a central processing unit (CPU), micro processing unit (MPU), or graphics processing unit (GPU). The processor 10 can access to the memory device 9. Specifically, the processor 10 can store data in the memory device 9 and read data from the memory device 9. The processor 10 may be realized by one or more devices or one or more chips.

The processor 10 can communicate bi-directionally with each of a plurality of terminals T1 to Tn via network line 3 using the first communication device 11.

The processor 10 can use the second communication device 12 to perform unidirectional digital broadcasting 4.

The program 14, when executed by the processor 10, functions as a reception control unit 16, data processing unit 17, first read unit 18A, second read unit 18B, first data conversion unit 19, second data conversion unit 20, first transmission control unit 21, and second transmission control unit 22.

The program 14 includes, for example, user management program for managing users who use the virtual environment, definition program for managing and processing the definition data 7 of objects of the virtual environment, program for generating and managing identification data 71 and 81, change program for managing and processing object dynamic action data 8, data conversion (broadcast data interface) program, and communication (distribution) program.

The reception control unit 16 receives the operation data 15 from any of the terminals T1 to Tn via the network line 3 and the first communication device 11. The reception control unit 16 may store the operation data 15 in the memory device 9.

The data processing unit 17 executes, for example, arithmetic processing based on the operation data 15 and updates the dynamic action data 8 of the object corresponding to the operation data 15 based on the calculation results.

The first read unit 18A reads the definition data 7 contained in the virtual environment data 13 stored in the memory device 9. For example, the first read unit 18A includes a function for extracting definition data 7 related to a plurality of objects from the virtual environment data 13. Such reading of the definition data 7 by the first read unit 18A may be performed when a virtual environment participation request is received from any of the terminals T1 to Tn.

The second read unit 18B reads the dynamic action data 8 contained in the virtual environment data 13 stored in the memory device 9. For example, the second read unit 18B includes a function to extract a plurality of dynamic action data 8 related to a plurality of objects from the virtual environment data 13. Such reading of the dynamic action data 8 by the second read unit 18B may be performed periodically. The second read unit 18B may extract the dynamic action data 8 from the virtual environment data 14 which have been updated since the previous readout.

The first data conversion unit 19 converts the definition data 7 to be sent to one or more of the terminals T1 to Tn into data 23 conforming to the first communication format for the network line 3.

The second data conversion unit 20 converts the dynamic action data 8 to be distributed simultaneously to multiple terminals T1 to Tn into broadcast data 24 in a second communication format which conforms to the digital broadcasting 4 standard. For example, the second data conversion unit 20 converts a plurality of dynamic action data 8 related to a plurality of objects contained in the virtual environment into broadcast data 24 collectively. In other words, the broadcast data 24 includes a list of a plurality of absolute coordinate data related to a plurality of objects in the virtual environment.

Specifically, the second data conversion unit 20, for example, adds a delimiter code to each of the dynamic action data 8, generates data containing a collection of dynamic action data 8 and delimiter codes instead of a block of video data (pixel data) for broadcasting, and performs coding (compression), group (packet) coding, multiplexing, scrambling, and modulation (for example, OFDM: Orthogonal Frequency Division Multiplexing) with respect to data to generate the broadcast data 24.

The first transmission control unit 21 transmits the data 23 in the first communication format obtained by the conversion by the first data conversion unit 19 to one or more of the terminals T1 to Tn via the network line 3 using the first communication device 11.

The second transmission control unit 22 performs digital broadcasting 4 using the second communication device 12 with respect to the broadcast data 24 in the second communication format obtained by conversion by the second data conversion unit 20, for example.

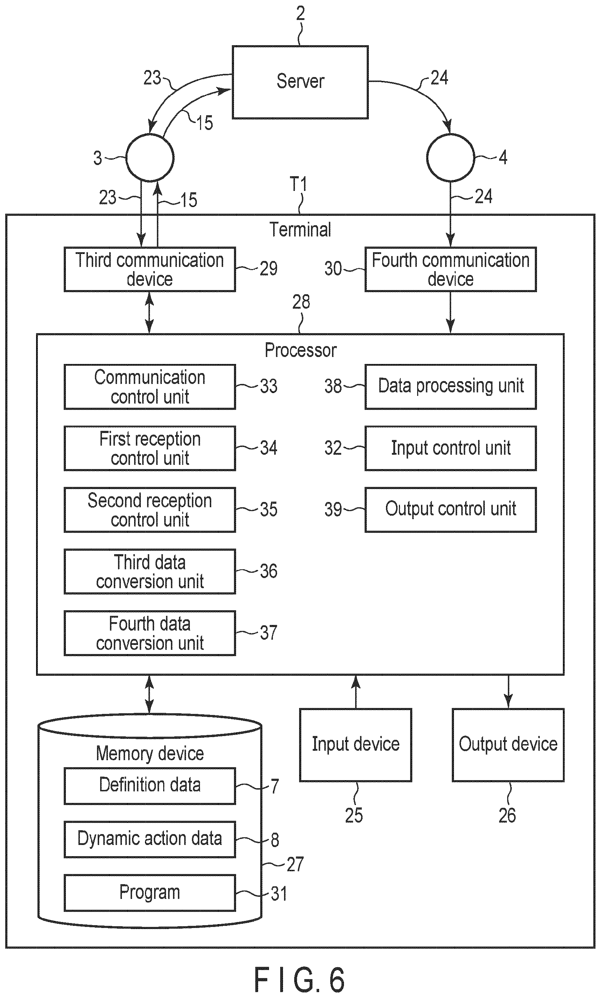

FIG. 6 is a block diagram showing an example of the schematic structure of terminal T1 of the first embodiment.

The terminal T1 includes an input device 25, output device 26, memory device 27, processor 28, third communication device 29, and fourth communication device 30.

The input device 25 accepts operations from the user. The input device 25 may include, for example, an operation controller, touch panel, pointing device, or keyboard.

The output device 26 provides images, sound, or the like to the user. The output device 26 may include, for example, a display, speaker, head-mounted display, headset, or wearable device.

The memory device 27 stores the definition data 7, dynamic action data 8, and program (software) 31. The memory device 27 may include, for example, a non-transient non-volatile memory device and a volatile memory device.

The program 31, when executed by processor 28, functions as an input control unit 32, transmission control unit 33, first reception control unit 34, second reception control unit 35, third data conversion unit 36, fourth data conversion unit 37, data processing unit 38, and output control unit 39.

The program 31 includes, for example, a user authentication program, program to realize a virtual environment based on the definition data 7 and the dynamic action data 8, program to cooperate with other programs, and communication program.

The input control unit 32 accepts signals indicating user operations via the input device 25.

The transmission control unit 33 transmits, for example, operation data 15, information, signals, requests, commands, notifications, instructions, and responses to the server 2 via the network line 3 using the third communication device 29, according to the content of user operations indicated by the signals accepted by the input control unit 32.

The first reception control unit 34 controls the third communication device 29 and receives the data 23 in the first communication format from the server 2 via the network line 3 and the third communication device 29.

The second reception control unit 35 controls the fourth communication device 30 to receive the broadcast data 24 in the second communication format transmitted by the digital broadcasting 4 from the server 2.

The third data conversion unit 36 converts the data 23 in the first communication format received by the first reception control section 34 into the definition data 7 in a format which can be processed by the data processing unit 38, and stores the definition data 7 in the memory device 27.

The fourth data conversion unit 37 performs demodulation, descrambling, and decoding (decryption) on the broadcast data 24 in the second communication format received by the second reception control section 35, converts the data to dynamic action data 8 in a format which can be processed by the data processing unit 38, and stores the dynamic action data 8 in the memory device 27.

The data processing unit 38 executes a process to realize the virtual environment based on the definition data 7 and dynamic action data 8 stored in the memory device 27.

The data processing unit 38 associates (maps) the definition data 7 and the dynamic action data 8 based on identification data 71 contained in the definition data 7 and identification data 81 contained in the dynamic action data 8. The data processing unit 38 then constructs the virtual environment, for example, by arranging the objects indicated by the definition data 7 along the operation status data 82 and the absolute coordinate data 83 included in the dynamic action data 8.

The output control unit 39 outputs data related to the virtual environment realized by the data processing unit 38 using the output device 26. The data related to the virtual environment output by the output device 26 may include 2D data, 3D data which realizes virtual reality, moving image data, or sound data.

In the information processing system 1 of the first embodiment, the server 2 distributes broadcast data 24 to a plurality of terminals T1 to Tn almost simultaneously using digital broadcasting 4. The terminals T1 to Tn then convert the broadcast data 24 to dynamic action data 8 almost simultaneously, which will be used to construct the virtual environment. This allows the dynamic action data 8 to be consistent among the terminals T1 to Tn.

In the following, an example of a process of the server 2 and the terminal T1 in the information processing system 1 of the first embodiment will be explained.

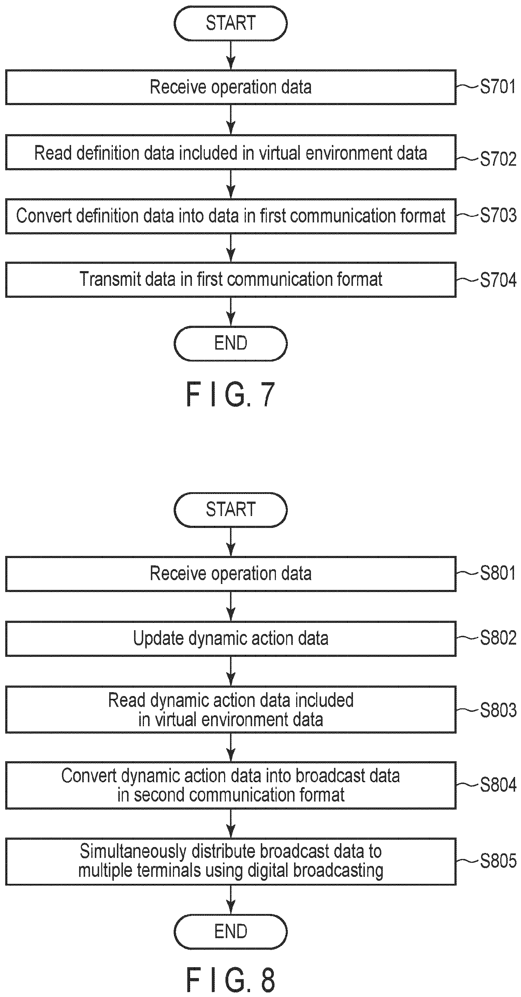

FIG. 7 is a flowchart showing an example of the transmission process of the definition data 7 from the server 2 to the terminal T1.

In step S701, the reception control unit 16 controls the first communication device 11 to receive the operation data 15 from the terminal T1 via the network line 3 and the first communication device 11, and stores the operation data 15 in the memory device 9.

In step S702, the first read unit 18A reads the definition data 7 contained in the virtual environment data 13 stored in the memory device 9 based on the operation data 15 received from the terminal T1 and stored in the memory device 9.

In step S703, the first data conversion unit 19 converts the definition data 7 into the first communication format data 23 according to the communication protocol corresponding to the network line 3.

In step S704, the first transmission control unit 22 controls the first communication device 11 and transmits the data 23 in the first format to the terminal T1 via the first communication device 11 and the network line 3.

FIG. 8 is a flowchart showing an example of a transmission process of the dynamic action data 8 from the server 2 to the terminals T1 to Tn.

In step S801, the reception control unit 16 controls the first communication device 11 to receive the operation data 15 from the terminal T1 via the network line 3 and the first communication device 11, and stores the operation data 15 in the memory device 9.

In step S802, the data processing unit 17 updates the dynamic action data 8 of the virtual environment data 13 stored in the memory device 9 based on the operation data 15 received from the terminal T1 and stored in the memory device 9.

In step S803, the second read unit 18B reads the dynamic action data 8 contained in the virtual environment data 13 stored in the memory device 9. With respect to the dynamic action data 8 read once, the second read unit 18B may read updated dynamic action data 8 only when an update occurs.

In step S804, the second data conversion unit 20 converts the dynamic action data 8 into broadcast data 24 conforming to the second communication format. Specifically, the second data conversion unit 20 performs coding, grouping, multiplexing, scrambling, and modulation on the dynamic action data 8 to generate the broadcast data 24.

In step S805, the second transmission control unit 22 controls the second communication device 12 and simultaneously distributes the broadcast data 24 in the second communication format to multiple terminals T1 to Tn using digital broadcasting 4.

Steps S803 through S805 above are repeated, for example, each time a predetermined period of time elapses.

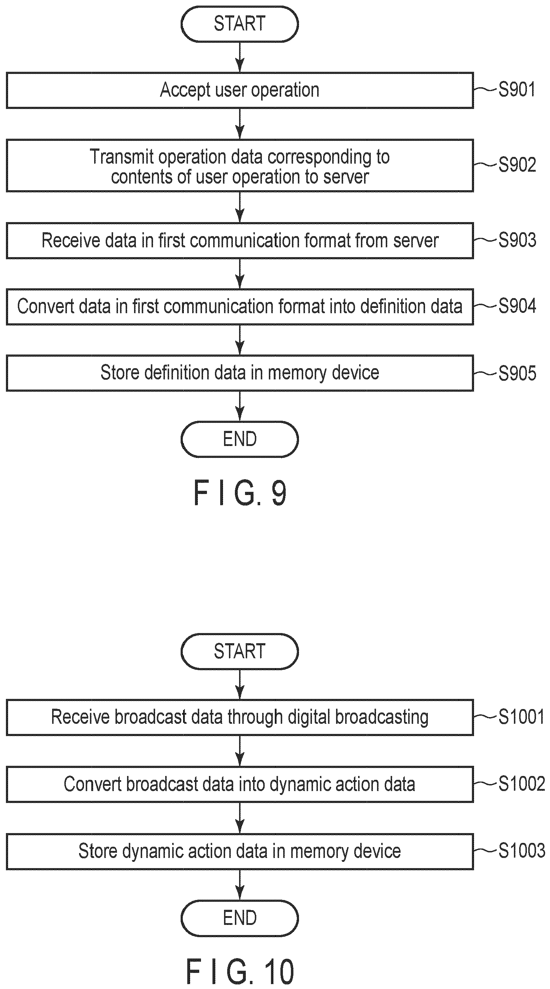

FIG. 9 is a flowchart showing an example of a reception process of the definition data 7 from the server 2 by the terminal T1.

In step S901, the input control unit 32 accepts user operation contents from the input device 25.

In step S902, the transmission control unit 33 controls the third communication device 29 and transmits, for example, operation data 15, information, signals, requests, commands, notifications, instructions, and responses, corresponding to the user operation contents received by the input control unit 32, via the third communication device 29 and the network line 3, to the server 2.

In step S903, the first reception control unit 34 controls the third communication device 29 to receive the data 23 in the first communication format from the server 2 via the network line 3 and the third communication device 29.

In step S904, the third data conversion unit 36 converts the data 23 in the first communication format received by the first reception control unit 29 into the definition data 7 in format which can be processed by the data processing unit 38.

In step S905, the third data conversion unit 36 stores the definition data 7 in the memory device 27.

FIG. 10 is a flowchart showing an example of the reception process of broadcast data 24 from the server 2 by the terminal T1.

In step S1001, the second reception control unit 35 controls the fourth communication device 30 to receive the broadcast data 24 distributed from the server 2 using digital broadcasting 4 via the fourth communication device 30.

In step S1002, the fourth data conversion unit 37 converts the broadcast data 24 in the second communication format received by the second reception control unit 35 into the dynamic action data 8 in a format which can be processed by the data processing unit 38. Specifically, the fourth data conversion unit 37 performs demodulation, descrambling, and decoding on the broadcast data 24 to generate the dynamic action data 8.

In step S1003, the fourth data conversion unit 37 stores the dynamic action data 8 in the memory device 27.

Steps S1001 to S1003 above are repeated, for example, each time a predetermined period of time elapses.

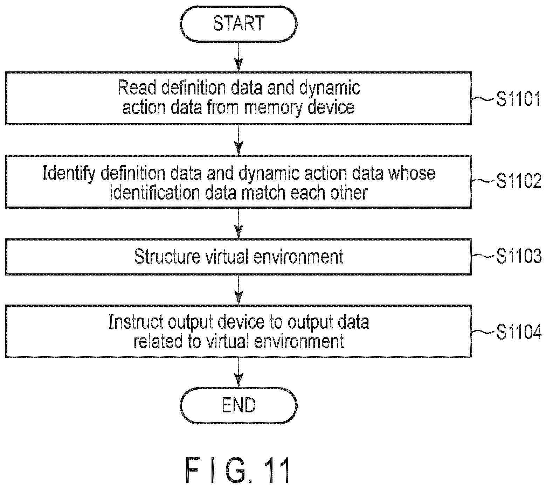

FIG. 11 is a flowchart showing an example of a process of realizing a virtual environment by the terminal T1. This process in FIG. 11 is executed, for example, after the processes in FIG. 9 and FIG. 10 above.

In step S1101, the data processing unit 38 reads the definition data 7 and the dynamic action data 8 from the memory device 27.

In step S1102, the data processing unit 38 recognizes the definition data 7 and the dynamic action data 8 whose identification data 71 and 81 match each other. The dynamic action data 8 includes, for example, identification data 81, operation status data 82, and absolute coordinate data 83.

In step S1103, the data processing unit 38 structures the current virtual environment based on the definition data 7 and the dynamic action data 8 with matching identification data 71 and 81.

In step S1104, the output control unit 39 causes the data related to the virtual environment structured by the data processing unit 38 to be output by the output device 26.

Steps S1101 to S1104 above are repeated, for example, each time a predetermined period of time elapses.

In the following, effects of the virtual environment realized by the information processing system 1 of the first embodiment will be explained.

In the information processing system 1 of the first embodiment, the server 2 divides the virtual environment data 13 into the definition data 7 and the dynamic action data 8. The server 2 transmits the definition data 7 to terminals T1 to Tn using the network line 3 such as the Internet. The server 2 simultaneously distributes the dynamic action data 8 to the terminals T1 to Tn using digital broadcasting 4, and repeats the distribution. Thus, the virtual environment of same state can be realized among multiple terminals T1 to Tn.

The information processing system 1 uses a combination of bidirectional network lines 3, such as the Internet, and a radio network of unidirectional digital broadcasting 4 for simultaneous distribution. In the first embodiment, the uplink which transmits data from terminals T1 to Tn to the server 2 is realized using the network lines 3. The downlink for transmitting data from the server 2 to the terminals T1 to Tn may use the network line 3 or digital broadcasting 4.

The downlink using digital broadcasting 4 achieves distribution to each region using broadcast radio waves. By realizing a virtual environment with the information processing system 1 of the first embodiment, the dynamic action data 8 can be simultaneously distributed to the terminals T1 to Tn of multiple user in the same region. Thus, differences in the virtual environment among the terminals T1 to Tn of multiple users existing in the same region can be prevented.

Even if digital broadcasting 4 is unidirectional communication from the server 2 to the terminals T1 to Tn in the first embodiment, bidirectional communication between the server 2 and the terminals T1 to Tn can be realized by using the network line 3.

For example, a digital terrestrial TV broadcasting network or a digital satellite broadcasting network can be used for digital broadcasting 4. The digital terrestrial TV broadcasting network is capable of data transmission at approximately 10 Mbps. The satellite digital broadcasting network is capable of data transmission at approximately 20 Mbps.

The network line 3 can be, for example, an Internet line, terrestrial network line, or satellite network line. As a comparative example, an existing metaverse system in which a network line 3 provides data communication at, for example, 1 Gbps is considered. An existing metaverse system uses the network line 3 for distributed communication of data to a large number of terminals. When realizing a metaverse, the communication speed of the network line 3 used for individual users, for example, needs to be generally stable at 10 to 20 Mbps on a best-effort basis. In an existing metaverse system, even if the network line 3 has a data communication capacity of 1 Gbps, for example, only a data communication speed of 1 Mbps can be secured for 10,000 connections per billion bits per second.

However, as in the first embodiment, by using simultaneous distribution of dynamic action data 8 by digital broadcasting 4, the same dynamic action data 8 can be distributed simultaneously to the terminals T1 to Tn of many users almost simultaneously, and the downlink speed can be kept constant even when the number of users exceeds 100,000, and thus, delay in the transmission of the dynamic action data 8 can be prevented.

In the first embodiment, the definition data 7 are sent from the server 2 to the terminals T1 to Tn using the network line 3, and the dynamic action data 8 are sent from the server 2 to the terminals T1 to Tn using digital broadcasting 4. In this manner, the definition data 7 and the dynamic action data 8 are sent from the server 2 to the terminals T1 to Tn via different communication routes, thereby making communication more efficient. For example, by transmitting the definition data 7 from the server 2 to the terminals T1 to Tn using the network line 3 instead of digital broadcasting 4, the communication load of digital broadcasting 4 can be reduced.

In the first embodiment, digital broadcasting 4 may include at least one of regional digital broadcasting and wide-area digital direction.

Regional digital broadcasting may use, for example, a digital terrestrial television broadcasting network. Digital terrestrial broadcasting is capable of broadcasting to a broadcast area with an approximate radius of 10 km. Therefore, a digital terrestrial TV broadcasting network can simultaneously distribute the dynamic action data 8 to multiple terminals T1 to Tn on a city-by-city basis.

Wide-area digital broadcasting may use, for example, a satellite digital broadcasting network. A satellite digital broadcasting network can broadcast to a broadcasting area which includes multiple cities. By using wide-area digital broadcasting in this manner, it is possible to operate a large-scale virtual environment over a wide area.

In the first embodiment, the dynamic action data 8 are distributed simultaneously from the server 2 to the terminals T1 to Tn using the digital broadcasting 4 specialized for town links. By separating communication from the server 2 to the terminals T1 to Tn into communication using the network line 3 and communication using digital broadcasting 4 as in the first embodiment, advanced security can be achieved. For example, in image distribution which realizes virtual reality, there is a risk that inappropriate software such as malware may be mixed in with the data transmitted from the server to the terminal. However, in the first embodiment, since downlink dynamic action data 8 is separated from uplink data, a physical data diode is structured to ensure a high level of security.

For example, if a virtual environment in which a large number of users participate is realized over the Internet without using digital broadcasting 4, data delays may occur in proportion to the increase in the number of accesses by the participants, and communication between the server 2 and the terminals T1 to Tn may become saturated. In contrast, in the information processing system 1 of the first embodiment, by using digital broadcasting 4, it is possible to transmit the dynamic action data 8, which is necessary to structure the virtual environment and changes over time, to a specific region and to a specific subscriber who can unscramble the broadcast data 24, thereby preventing data delays and preventing communication delays.

In existing metaverse systems, the transmission and reception of data between terminals and servers is performed on a single-flow time axis. In contrast, in the information processing system 1 of the first embodiment, the transmission and reception of data between the terminals T1 to Tn and the server 2 can be performed on a parallel time axis.

Specifically, in an existing metaverse system, a process is executed by sending a call from one device to the other and returning a response from the other device to the one device. The process of returning a response to a call in this manner requires individual processing and is a single-stream process. In this type of single-stream process, if the number of terminals is N, communication increases by the factorial of N. In contrast, in the information processing system 1 of the first embodiment, since terminals T1 to Tn acquire the dynamic action data 8 using digital broadcasting 4, there is no need for terminals T1 to Tn and the server 2 to send calls and return responses therebetween. The transmission of data 24 from the server 2 to each of the multiple terminals T1 to Tn is performed in parallel using digital broadcasting 4. The terminals T1 to Tn can process the broadcast data 24 received by the digital broadcasting 4 as legitimate without authentication. Therefore, communication can be performed for N terminals T1 to Tn in approximately the time of command transmission time + processing speed of the server 2 + time of transmission speed of the radio wave of digital broadcasting 4.

In an existing metaverse system, multiple virtual environments are assigned to each of multiple users, and the states of the multiple virtual environments are matched using, for example, correction algorithms. In such an existing metaverse system, it is difficult to increase the number of users to more than 10,000, for example. However, the virtual environment realized by the first embodiment can be shared by multiple users. The information processing system 1 of the first embodiment can provide a unified virtual environment (shared virtual environment) with consistent data contents even if the number of users increases to 10,000 or more. Furthermore, for example, there is no need to use a correction algorithm to match the states of multiple virtual environments, and thus, simplifying the process and reducing the amount of communication. For example, the processing load of terminals T1 to Tn of the first embodiment can be less than half of the processing load of terminals in the existing metaverse system.

### (Second embodiment)

In a second embodiment, an example of a process in which a terminal T1 sends a virtual environment participation request (for example, login request) to a server 2 in an information processing system 1 of the first embodiment above will be described.

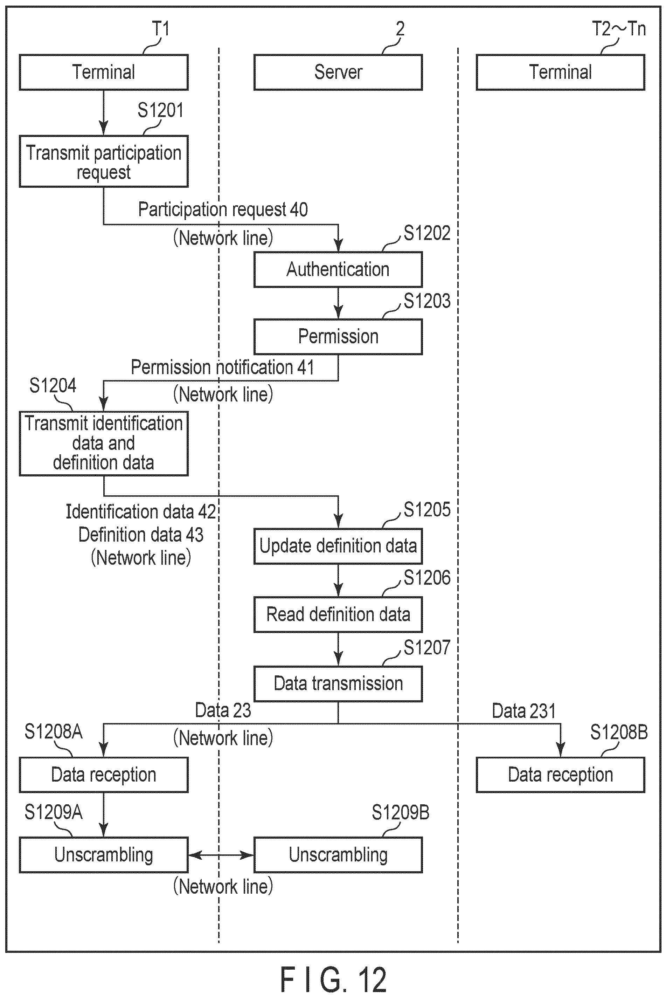

FIG. 12 is a flowchart showing an example of a participation process of the terminal T1 executed by the information processing system 1 of the second embodiment.

In FIG. 12, a case where terminals T2 to Tn are already receiving broadcast data 24 from the server 2 using digital broadcasting 4 is illustrated.

In the second embodiment, in order to simplify the explanation, a process performed by a processor 10 of the server and a process performed by a processor 28 of terminals T1 to Tn will be specifically described, and the processes performed by the other components will be omitted or briefly described.

In step S1201, the processor 28 of terminal T1 sends a participation request 40 for the virtual environment to the server 2 via a network line 3.

In step S1202, the processor 10 of the server 2 executes an authentication process with respect to the terminal T1 when the participation request 40 is received from the terminal T1 via the network line 3.

In step S1203, the processor 10 of the server 2 permits the terminal T1 to participate in the virtual environment if the authentication is successful, and sends a permission notice 41 to the terminal T1 via the network line 3.

In step S1204, the processor 28 of the terminal T1 transmits identification data 42 and definition data (for example, avatar data) 43 to the server 2 via the network line 3 according to user operation. If the definition data 43 is already stored in the server 2, the terminal T1 may omit sending the definition data 43 to the server 2. If the identification data 42 is included within the definition data 43, the processor 28 of the terminal T1 may simply transmit the definition data 43 to the server 2 via the network line 3.

In step S1205, the processor 10 of the server 2 receives the identification data 42 and the definition data 43 from the terminal T1 via the network line 3, and updates the definition data 7 of virtual environment data 13 stored in a memory device 9 based on the identification data 42 and the definition data 43. As a result, the identification data 42 and the definition data 43 are stored in the memory device 9 of the server 2.

In step S1206, the processor 10 of the server 2 reads the definition data 7 from the memory device 9.

In step S1207, the processor 10 of the server 2 converts the definition data 7 into data 23 in the first communication format and transmits the data 23 to the terminal T1 via the network line 3. Similarly, the processor 10 of the server 2 converts the definition data 43 corresponding to terminal T1 into data 231 in the first communication format, and transmits the data 231 to terminals T2 to Tn via the network line 3. Here, the definition data 43 is, for example, a portion of the definition data 7 which corresponds to at least the first terminal T1. Note that, the server 2 may transmit the definition data 7 to the terminals T2 to Tn instead of the definition data 43.

In step S1208A, the processor 28 of the terminal T1 receives the data 23 from the server 2 via the network line 3 and converts the data 23 into the definition data 7.

In step S1208B, the processors 28 of the terminals T2 to Tn receive the data 231 from the server 2 via the network line 3 and convert the data 231 to the definition data 43.

In step S1209A, when the processor 28 of the terminal T1 receives the data 23 from the server 2 via the network line 3, it cooperates with the processor 10 of the server 2 via the network line 3 to enable unscrambling of digital broadcasting 4.

Similarly, in step S1209B, the processor 10 of the server 2 cooperates with the processor 28 of the terminal T1 via the network line 3 to perform a process with respect to the terminal T1 to enable unscrambling of digital broadcasting 4.

The process to enable unscrambling may be, for example, a process in which the server 2 sends a rewriting instruction of a digital broadcasting integrated circuit (IC) card to the terminal T1 via the network line 3, and the terminal T1 rewrites the IC card according to the rewriting instruction received from the server 2 via the network line 3.

After steps S1209A and S1209B, the terminal T1, as with the other terminals T2 to Tn, can receive broadcast data 24 from the server 2 using digital broadcasting 4.

In the second embodiment, steps S1209A and S1209B regarding unscrambling are executed after steps S1204 to S1208A, and S1208B. However, steps S1209A and S1209B need only be performed after the participation of terminal T1 is permitted in step S1203. In other words, steps S1209A and S1209B may be executed before steps S1204 to S1208A, and 1208B or in parallel with steps S1204 to S1208A, and S1208B.

In the second embodiment described above, after a new terminal T1 joins the virtual environment from a state where the server 2 and terminals T2 to Tn have already realized the virtual environment, a common virtual environment based on the same dynamic action data 8 can be realized among terminals T1 to Tn.

In the second embodiment, even if the broadcast data 24 is scrambled, a new terminal T1 can be changed to be able to unscrambling, and the terminal T1 can be allowed to join the virtual environment.

In the first and second embodiments described above, the identification data 81, operation status data 82, and absolute coordinate data 83 related to the virtual environment are transmitted from the server 2 to terminals T1 to Tn using digital broadcasting 4, but other data need not be transmitted by digital broadcasting 4. Therefore, an excessive amount of data to be transmitted by digital broadcasting 4 and the complexity of digital broadcasting 4 can be suppressed.

Note that, the present invention is not limited to the embodiments described above but the constituent elements of the invention can be modified in various manners without departing from the spirit and scope of the invention. Various inventions can be formed based on any appropriate combination of a plurality of constituent elements disclosed in the embodiments. For example, some constituent elements may be deleted in all of the constituent elements disclosed in the embodiments. Furthermore, the constituent elements described in different embodiments may be combined arbitrarily.

## Claims

1. An information processing apparatus comprising:
a memory device configured to store virtual environment data of a virtual environment shared by a plurality of users; and
a processor which is accessible to the memory device, and is communicable with a plurality of terminals corresponding to the users, wherein
the processor reads first data including a model of an object belonging to the virtual environment included in the virtual environment data stored in the memory device, transmits the first data to the terminals using a network line which is bidirectionally communicable, reads second data including coordination data and operation state data of the object included in the virtual environment data stored in the memory device, and distributes the second data to the terminals using digital broadcasting, and
upon receipt of a participation request to the virtual environment from a first terminal of the terminals, the processor transmits the first data to the first terminal via the network line, and transmits a portion of the first data which at least corresponds to the first terminal to another terminal than the first terminal of the terminals via the network line.

2. The information processing apparatus of claim 1, wherein the processor executes a process of unscrambling the digital broadcasting with respect to the first terminal via the network line.

3. The information processing apparatus of claim 1, wherein the processor receives operation data from the first terminal via the network line, updates the virtual environment data stored in the memory device based on the operation data, and reads the second data after updating of the virtual environment data in order to simultaneously distribute the second data to the terminals using the digital broadcasting.

4. The information processing apparatus of claim 3, wherein the processor reflects an operation indicated by the operation data received from the first terminal on the coordination data of the virtual environment data stored in the memory device, and simultaneously distribute the second data including the coordination data after the reflection and the operation state data corresponding the operation to the terminals using the digital broadcasting.

5. The information processing apparatus of claim 1, wherein the processor collectively converts a plurality of second data including a plurality of coordination data and a plurality of operation state data related to a plurality of objects belonging to the virtual environment into broadcast data each time a predetermined period of time elapses, and distributes the broadcast data to the terminals using the broadcasting.

6. An information processing apparatus comprising:
a memory device configured to store virtual environment data of a virtual environment shared by a plurality of users; and
a processor which is accessible to the memory device, and is communicable with a plurality of terminals corresponding to the users, wherein
the processor reads first data including a model of an object belonging to the virtual environment included in the virtual environment data stored in the memory device, transmits the first data to the terminals using a network line which is bidirectionally communicable, reads second data including coordination data and operation state data of an object included in the virtual environment data stored in the memory device, and distributes the second data to the terminals using digital broadcasting, and
the processor executes a process enabling unscrambling of the digital broadcasting with respect to the first terminal via the network line.

7. A method of providing a virtual environment with respect to a plurality of terminals, the method comprising:
reading, by at least one computer, first data including a model of an object belonging to the virtual environment included in virtual environment data of the virtual environment shared by a plurality of users stored in the memory device;
transmitting, by the at least one computer, the first data to a plurality of terminals using a bidirectionally communicable network line;
reading, by the at least one computer, second data including coordination data and operation state data of the object included in the virtual environment data stored in the memory device; and
distributing, by the at least one computer, the second data to the terminals using digital broadcasting, wherein
the method further comprises, upon receipt of a participation request to the virtual environment from a first terminal of the terminals by the at least one computer, transmitting the first data to the first terminal via the network line and transmitting a portion of the first data which at least corresponds to the first terminal to another terminal than the first terminal of the terminals via the network line by the at least one computer.
